Europäisches Patentamt

European Patent Office

Office européen des brevets

(11) Publication number: **0 323 680**
**A2**

## EUROPEAN PATENT APPLICATION

(21) Application number: 88203031.5

(51) Int. Cl.⁴: **C02F 5/10**

(22) Date of filing: 29.12.88

(30) Priority: 06.01.88 US 141187

(43) Date of publication of application:
12.07.89 Bulletin 89/28

(84) Designated Contracting States:
AT BE CH DE ES FR GB GR IT LI LU NL SE

(71) Applicant: **CALGON CORPORATION**
**Route 60-Campbell's Run Road**
**Robinson Township Pennsylvania 15205(US)**

(72) Inventor: **Gill, Jasbir S.**
**123 Darnley Drive**
**Coraopolis, PA 15108(US)**
Inventor: **Rey, Susan P.**
**203 Oakhaven Drive**
**Coraopolis, PA 15108(US)**
Inventor: **Wiernik, John H.**
**1233 Adon Street**
**Pittsburgh, PA 15204(US)**

(74) Representative: **Hesketh, Alan, Dr.**
**European Patent Department Merck & Co.,**
**Inc. Terlings Park Eastwick Road**
**Harlow Essex, CM20 2QR(GB)**

(54) Method for controlling silica/silicate deposition in aqueous systems using carboxylic polymers and molybdates.

(57) This invention is directed to a method for controlling the formation of silica/silicate deposits in aqueous systems by adding an effective amount, preferably at least 0.1 ppm, of a carboxylic polymer and, optionally, a source of molybdate or borate ions to the aqueous system being treated.

EP 0 323 680 A2

# METHOD FOR CONTROLLING SILICA/SILICATE DEPOSITION IN AQUEOUS SYSTEMS USING CARBOXYLIC POLYMERS AND MOLYBDATES

## BACKGROUND OF THE INVENTION

U.S. Pat. No. 3,928,196 discloses the use of copolymers of 2-acrylamido-2-methylpropylsulfonic acid and acrylic acid as scale innibitors.

U.S. Pat. No. 4,640,793 discloses the use of admixtures containing carboxylic acid/sulfonic acid polymers and phosphonates as scale and corrosion inhibitors.

U.S. Pat. No. 4,618,448 discloses the use of polymers comprising an unsaturated carboxylic acid, an unsaturated sulfonic acid and an unsaturated polyalkylene oxide as scale innibitors.

Japanese No. 57-084794 discloses the use of copolymers of acrylic acid and allyl polyethylene glycol as scale innibitors.

European patent application 84301450.7 discloses carboxylic acid/sulfonic acid copolymers in combination with organic phosphonates as scale inhibitors.

U.S. Patent 4,510,059 discloses the use of carboxylic funtional polyampholytes to reduce silica deposits in agueous systems.

U.S. Patent 4,532,047 discloses a method of inhibiting amorphous silica scale formation using polypolar organic compounds and borate ion sources.

U.S. Patent 4,584,104 discloses a method of inhibiting amorphous silica scale formation using a source of orthoborate ions.

Silica/silicate deposition in aqueous systems, for example boilers, cooling towers and systems containing hypersaline geothermal brines, is a continuing problem. Traditionally, deposition has been controlled by softening the makeup water to the system being treated, by blowdown, or by both. If deposition occurs, mechanical removal or washing with ammonium fluoride or hydrofluoric acid is generally the method of control. Obviously, mechanical or chemical cleaning causes down time and increased energy and labor costs.

pH affects the ionization of silanol groups and, therefore, affects the polymerization rate. Silica first forms, then three dimensional networks form. Eventually, colloidal particles grow through condensation. At pH 7, nuclei formation and particle growth is very rapid. The pH of cooling water is generally 6.0 to 8.5 and the water temperature is generally about $30°$ to $70°$ C. The pH of geothermal brines is generally 4.0 to 6.0 and the brine temperature is generally about $100°$ to $210°$ C.

It is known to use cationic polymers or cationic surfactants as silica scale inhibitors in hypersaline geothermal brines (Harrar. J.E. et al, "Final Report on Tests of Proprietary Chemical Additives as Anti-scalants for Hypersaline Geothermal Brine", January 1980, Lawrence Livermore Laboratory, Harrar, J.E. et al "On-Line Tests of Organic Additives for the Inhibition of the Precipitation of Silica from Hypersaline Geothermal Brine IV, Final tests of Candidate Additives", February 1980. Lawrence Livermore Laboratories; and Harrar, J.E. et al, "Studies of Scale Formation and Scale Inhibitors at the Salton Sea Geothermal Field", Corrosion/80. Paper No. 225, International Corrosion Forum, devoted exclusively to the Protection and Performance of Materials, Mar. 3-7, 1980. Chicago, IL).

The inventors have discovered a method for controlling the deposition of silica and silicates in an aqueous system using carboxylic polymers. While such polymers alone are effective inhibitors, molybdates or borates enhance performance under certain conditions. Admixtures comprising carboxylic polymers and a molybdate, for example, have been shown to prevent the deposition of alkaline earth metal silicates when added to waters containing silica and hardness. Approximately 10 mg/L of a carboxylic polymer in combination with 20 mg/L of ammonium molybdate allowed a system containing 150 mg/L $SiO_2$, IOO mg/L $Ca^{+2}$ and 7.5 mg/L $Mg^{2+}$ to be cycled-up twice without substantial loss of dissolved constituents or deposit formation.

## DETAILED DESCRIPTION OF THE INVENTION

The instant invention is directed to a method for controlling silica/silicate deposition in an aqueous system comprising adding an effective amount of a water soluble polymer having a molecular weight of less than about 50,000, preferably less than about 20,000, to the system being treated, wherein the polymer is prepared from: acrylic acid, methacrylic acid, α-halo acrylic acid, maleic acid, itaconic acid, vinyl acetic acid, allyl acetic acid, fumaric acid, or β-carboxyethyl acrylate, alone or in combination, and salts thereof.

Additionally, a molybdate ion or a borate ion source may be added. Molybdate ions are preferred, as molybdate-containing compositions unexpectedly enhance the performance of carboxylic polymers under certain conditions.

Any source of molybdate or borate ions can be used. The preferred molybdate source is ammonium molybdate, and the preferred borate sources are described in U.S. Patents 4,504,104 and 4,532,047, which are hereby incorporated into this specification by reference. If a molybdate or borate ion source is used, the weight ratio of polymer:ion source should range from about 1:10 to about 10:1. The preferred compositions contain polymer:ion source weight ratios of about 1:4 to about 4:1.

An effective amount of a carboxylic polymer should be added to the aqueous system being treated. As used herein, the term "effective amount" is that amount necessary to control silica/silicate deposition in the system being treated. Generally, the effective amount will range from about 0.1 to about 200 ppm, on an active basis, based on the total weight of the aqueous system being treated, preferably from about 1 to about 200 ppm.

As used herein, the term "controlling silica/silicate deposition" is meant to include inhibition of silica polymerization, threshold precipitation inhibition, stabilization, dispersion, solubilization, and/or particle size reduction of silica, silicates, especially calcium and magnesium silicates, and silicon ions. Clearly, the instant additives are threshold silicate precipitation inhibitors, but they also stabilize, disperse and solubilize silica and silicates. Thus, the inventors have discovered that carboxylic polymers, alone and in combination with a molybdate or borate ion source, inhibit, minimize or prevent silica deposition under severe operating conditions, and intend that the instant specification describe this discovery, without attempting to describe the specific mechanism by which silica/silicate deposition is prevented or inhibited.

The term "aqueous system", as used herein, is meant to include any type of system containing water, including, but not limited to, cooling water systems, boiler water systems, desalinations systems, gas scrubber water systems, blast furnace water systems, reverse osmosis systems, evaporator systems, paper manufacturing systems, mining systems and the like.

While homopolymers and copolymers are preferred, mixtures of the above-listed monomers can be used to prepare suitable polymers. Also, nonionic monomers such as acrylamide, methacrylamide and acrylonitrile may be present in the polymers.

The preferred polymers are water soluble polymers having a molecular weight less than about 20,000 selected from the group consisting of: homopolymers of acrylic acid and salts thereof, homopolymers of methacrylic acid and salts thereof, copolymers of acrylic acid and methacrylic acid and salts thereof, and hydrolyzed polyacrylamides and salts thereof. The most preferred polymers are acrylic acid/methacrylic acid copolymers, and salts thereof.

The use of at least one of the instant carboxylic polymers is critical to the instant method in that these polymers, alone, minimize, inhibit and/or prevent silica/silicate deposition under severe saturation and/or temperature conditions. These polymers are efficient up to a of approximately 9.0.

The polymers of the instant invention are well known to those skilled in the water treatment art and are commonly available. Molybdate and borate ion are also commonly available.

The compositions disclosed herein effectively control silica/silicate deposition in aqueous systems which have high alkalinity, high calcite saturation and/or high pH values. Such conditions are often times encountered as cycles of concentration increase. Thus, the instant polymer compositions provide silica/silicate protection under severe conditions where conventional silica control agents may be ineffective.

The instant compositions may be added to the system being treated by any convenient means, and the components may be added separately or in combination. A preferred method of addition via makeup water streams.

Additionally, other conventional water treatment agents, including corrosion inhibitors such as tolyltriazole, can be used with the instant polymers.

## EXAMPLES

The following examples demonstrate the use of the instant compositions to inhibit silica/silicate deposition. These examples are not intended to limit the scope of the instant invention in any way.

In these these examples, the following compounds were tested:

AA/MA, which is a copolymer of acrylic acid and methacrylic acid available from Ciba Geigy as Belclene 283.

PAA, which is a homopolymer of acrylic acid having a molecular weight of approximately 2,200.
PMA, which is polymaleic acid, available from Ciba Geigy as Belclene 200.
Ammonium molybdate, which is a source of $MoO_4^{2-}$ ions.

Test Method

The following procedure was used to evaluate the ability of the instant polymers to prevent the formation and deposition of calcium and magnesium silicates.

1. AMPS is a registered trademark of The Lubrizol Corporation.

A two-liter polypropylene flask having a side arm was filled to the 1500 ml level with makeup water as described in Table I. The temperature of the makeup water was controlled and maintained by immersing an electrically heated 304 stainless steel heat-exchanger into the polypropylene flask. A refractive index liquid level sensor was placed in the side arm to maintain a constant volume in the flask by controlling a solenoid valve on inlet line from the makeup water reservoir.

Evaporation was achieved by passing filtered dry air or nitrogen at a regulated and measured rate through a teflon tube placed at the bottom of the flask. The makeup water was concentrated to various levels (i.e., cycled-up) by controlling the rate of aeration. The pH of the system was controlled by feeding acid or alkali as required by the set point pH on a pH-stat device.

After reaching the targeted cycles of concentration, the cycles were maintained constant for several days. This simulated the operating procedure c-nly used in industrial cooling towers. In this case the makeup water in the reservoir was replaced by distilled water to stop further concentration. The makeup water described in Table I was selected because it is stable at room temperature and it gives a sufficient induction time to establish the concentration process before any mineral precipitation occurs. The pH of the makeup water was adjusted to 8-9 and was maintained at the selected pH in the flask during the entire cycling up process. The makeup water contained 10 mg/L of the designated inhibitor. Aliquots were withdrawn at various time intervals, filtered, and analyzed for chloride, calcium, magnesium and silica. The cycles of concentration were determined based on the chloride concentration in the cycled up water. The expected concentration of the other species in solution was then calculated based on the cycles of concentration. The amount of deposit on the heat exchanger was determined by weighing the heat exchanger at the beginning and at the end of each run.

The results are shown in Tables II, III and IV.

TABLE I

| CHEMICAL COMPOSITION OF THE MAKEUP WATER | |
|---|---|
| Ion | Total Concentration (mg/L) |
| Calcium | 100 |
| Magnesium | 7.5 |
| Sodium | 153 |
| Chloride | 199 |
| Sulfate | 219 |
| Silica | 150 |

TABLE II

| INHIBITION OF SILICA/SILICATES AT pH 9 ± 0.2 USING AIR OR NITROGEN FOR CYCLING-UP AND HOLDING CONSTANT CYCLES (1.8-2.0) FOR 2-3 DAYS | | | | | | |
|---|---|---|---|---|---|---|
| Additive | Inhibitor Dosage (mg/L) | Cycling-up Medium | % Inhibition Deposit | % Retention in Solution (mg/L) | | |
| | | | | $SiO_2$ | Ca | Mg |
| PAA | 2 | Air | 49 | 85 | 5 | 17 |
| | 5 | Air | 45 | 72 | 12 | 33 |
| | 10 | Air | 83 | 82 | 25 | 24 |
| | 20 | Air | 32 | 77 | 4 | 4 |
| | 10 | $N_2$ | 92 | 78 | 88 | 57 |
| AA/MA | 10 | $N_2$ | 61 | 70 | 88 | 0 |
| $MoO_4^{2-}$ | 20 | $N_2$ | 59 | 58 | 10 | 7 |
| AA/MA + $MoO_4^{2-}$ | 10/20 | $N_2$ | 97 | 93 | 89 | 35 |
| PAA + $MoO_4^{2-}$ | 10/20 | $N_2$ | 62 | 67 | 90 | 0 |
| PMA | 10 | $N_2$ | 59 | 72 | 89 | 15 |

TABLE III

| INHIBITION OF SILICA/SILICATES AT pH 8.8± 0.2 USING AIR FOR CYCLING-UP AND HOLDING CONSTANT CYCLES (1.8-2.0) FOR 7-8 DAYS | | | | | |
|---|---|---|---|---|---|
| Additive | Dosage (mg/L) | % Inhibition Deposit | % Retention in Solution (mg/L) | | |
| | | | $SiO_2$ | Ca | Mg |
| PAA | 10 | 97 | 37 | 2 | 0 |
| AA/MA | 10 | 73 | 70 | 18 | 0 |
| AA/MA + $MoO_4^{2-}$ | 10/20 | 86 | 74 | 27 | 83 |

TABLE IV

| INHIBITION OF SILICA/SILICATES AT pH 8.8 ± 0.2 USING AIR FOR CYCLING-UP THE MAKE-UP WATER* AND HOLDING CONSTANT CYCLES (1.8-2.0) FOR 3 DAYS | | | | | |
|---|---|---|---|---|---|
| Additive | Dosage (mg/L) | % Inhibition Deposit | % Retention in Solution (mg/L) | | |
| | | | $SiO_2$ | Ca | Mg |
| AA/MA | 10 | 96 | 75 | 89 | 31 |
| $MoO_4^{2-}$ | 20 | 16 | 58 | 3 | 0 |
| AA/MA + $MoO_4^{2-}$ | 10/20 | 95 | 88 | 91 | 100 |

* with 100 mg/L $HCO_3^-$ alkalinity added to the makeup water

**Claims**

1. A method for controlling silica/silicate deposition in an aqueous system comprising adding to said system an effective amount of a water soluble polymer having a molecular weight of less than about 20,000 selected from the group consisting of homopolymers of acrylic acid and salts thereof, homopolymers of methacrylic acid and salts thereof and copolymers of acrylic acid and methacrylic acid and salts thereof.

2. The method of Claim 1, wherein a molybdate ion source or a borate ion source is added to said polymer at a polyer:ion source weight ratio of about 10:1 to about 1:10.

3. The method of Claim 1, wherein said polymer is added at a dosage of from about 0.1 to about 200 ppm.

4. The method of Claim 2, wherein said polymer added at a dosage of from about 0.1 to about 200 ppm.

5. The method of Claim 2, wherein a molybdate ion source is added.

6. The method of Claim 4, wherein a molybdate ion source is added.